(19) Europäisches Patentamt
European Patent Office
Office européen des brevets

(11) Numéro de publication: **0 068 541**
**B1**

# (12) FASCICULE DE BREVET EUROPEEN

(45) Date de publication du fascicule du brevet: **20.03.85**

(51) Int. Cl.⁴: **C 22 B 3/00**, C 01 G 17/00

(21) Numéro de dépôt: **82200686.2**

(22) Date de dépôt: **04.06.82**

(54) **Procédé pour séparer du germanium d'une solution aqueuse.**

(30) Priorité: **22.06.81 LU 83448**

(43) Date de publication de la demande: **05.01.83 Bulletin 83/1**

(45) Mention de la délivrance du brevet: **20.03.85 Bulletin 85/12**

(84) Etats contractants désignés: **BE DE FR**

(56) Documents cités:
**EP - A - 0 046 437**

**CHEMICAL ABSTRACTS, vol. 94, no. 16, 20 avril 1981, page 144, no. 123953m, Columbus Ohio (USA); CHEMICAL ABSTRACTS, vol. 89, no. 12, 18 septembre 1978, page 359, no. 95718q, Columbus Ohio (USA); L.V. KOVTUN et al.: "Extraction of germanium (IV) by 5,7-dibromo-8-hydroxyquinoline"**

(73) Titulaire: **METALLURGIE HOBOKEN-OVERPELT Société anonyme dite:, 8, rue Montagne du Parc, B-1000 Bruxelles (BE)**

(72) Inventeur: **De Schepper, Achille, Esdoornlaan 8, B-2451 Lichtaart-kasterlee (BE)**
Inventeur: **Coussement, Marc, Magdalena Vermeerschlaan 18, B-2540 Hove (BE)**
Inventeur: **Van Peteghem, Antoine, Leemanslaan 21, B-2430 Olen (BE)**

(74) Mandataire: **Saelemaekers, Juul et al, METALLURGIE HOBOKEN-OVERPELT A. Greinerstraat 14, B-2710 Hoboken (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention se rapporte à un procédé pour séparer du germanium d'une solution aqueuse acide germanifère, suivant lequel

(a) on met la solution en contact avec un liquide organique contenant une 8-hydroxyquinoline substituée en produisant ainsi une phase organique chargée de germanium et une phase aqueuse appauvrie en germanium;

(b) on sépare la phase organique chargée de germanium de la phase aqueuse appauvrie en germanium;

(c) on met à une température supérieure à 40°C la phase organique chargée de germanium en contact avec une solution aqueuse basique en produisant ainsi une phase organique appauvrie en germanium et une phase aqueuse basique chargée de germanium, et

(d) on sépare à une température supérieure à 40°C la phase organique appauvrie en germanium de la phase aqueuse basique chargée de germanium.

Un tel procédé est décrit dans le document EP-A-0 046 437 déposé le 17.08.81 (date de priorité: 15.08.80). Dans le procédé selon ce document, on utilise dans l'étape (c) un rapport volumétrique entre la phase organique et la phase aqueuse égal à 24. Ce procédé présente l'inconvénient d'exiger un contact de longue durée pour réaliser l'étape (c) et une décantation de longue durée pour réaliser l'étape (d).

Le but de la présente invention est de fournir un procédé tel que défini ci-dessus, qui évite les inconvénients du procédé selon le document précité.

A cet effet, selon l'invention on utilise dans l'étape (c) un rapport volumétrique entre la phase organique et la phase aqueuse inférieur à 1.

On réalise avantageusement ce rapport en recyclant une fraction de la phase aqueuse résultant de l'étape (d) vers l'étape (c), ce qui permet de produire dans l'étape (d) une phase aqueuse germanifère concentrée.

Généralement on obtient les meilleurs résultats lorsqu'on effectue les étapes (c) et (d) à une température comprise entre 45 et 60°C et qu'on utilise dans l'étape (c) un rapport volumétrique entre la phase organique et la phase aqueuse (appelé ci-après rapport O:A) compris entre 0,9 et 0,5.

La 8-hydroxyquinoline substituée utilisée dans le procédé de l'invention répond à la formule générale

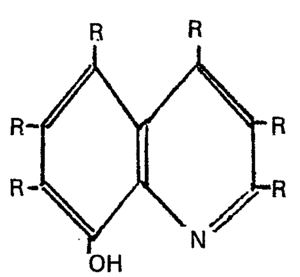

dans laquelle R est de l'hydrogène ou un groupe d'hydrocarbure tel alkyl, alkényl, cycloaliphatique, aryl ou une combinaison de ceux-ci (par exemple alkaryl, aralkényl, alkylcycloalkyl, aralkyl, etc.), au moins un des R étant un tel groupe d'hydrocarbure. Parmi les composés répondant à cette formule générale, les 7-alkényl-8-hydroxyquinolines, dont de nombreux représentants sont décrits dans le document US-A-3 637 711, sont les plus intéressants. On peut par exemple utiliser une 7-alkényle-8-hydroxyquinoline, dont le groupe alkényl est constitué de

$$\begin{array}{l} C_9H_{19} \\ | \\ -CH \\ | \\ CH=CH_2 \end{array} \qquad \text{et}$$

qui est vendue sous la marque déposée «Kelex 100» par la firme Sherex. On peut également utiliser une 7-alkényl-8-hydroxyquinoline vendue sous la marque déposée «LIX 26» par la firme Henkel.

Il est à noter que les 8-hydroxyquinolines substituées sont généralement utilisées à l'état dilué. Le liquide organique utilisé dans l'étape (a) contient donc, outre la 8-hydroxyquinoline substituée, un diluant inerte tel que du kérosène. Ce liquide organique peut en outre contenir un agent empêchant la formation d'émulsion tel un alcool aliphatique à longue chaîne. La Demanderesse a trouvé que l'on obtient les meilleurs résultats avec un liquide organique ayant une teneur en 8-hydroxyquinoline substituée de 1 à 20% en volume; en dessous de 1% la capacité extractrice du liquide organique est trop faible tandis qu'au-dessus de 20% le liquide organique devient trop visqueux.

Il est à noter qu'une partie de l'acide contenu dans la solution aqueuse germanifère de départ est co-extraite avec le germanium par le liquide organique dans l'étape (a), si ce liquide organique n'est pas préalablement acidifié i.e. mis en contact avec une solution acide. La phase aqueuse appauvrie en germanium produite dans l'étape (a), présente donc une acidité plus faible que la solution aqueuse de départ, si le liquide organique n'a pas été acidifié préalablement.

Lorsque la solution de départ contient des métaux tels du cuivre, du zinc et du fer trivalent, qui sont co-extraits avec le germanium par le liquide organique dans l'étape (a), c'est-à-dire des métaux qui, comme le germanium, sont extraits en milieu acide par une 8-hydroxyquinoline substituée, il est particulièrement avantageux de veiller à ce que l'acidité de la phase aqueuse appauvrie en germanium, produite dans l'étape (a) [et séparée dans l'étape (b)] ne soit pas inférieure à 1 N. Lorsqu'en effet cette acidité est inférieure à 1 N, la co-extraction d'éléments tels Cu, Zn et Fe est importante.

Une acidité très élevée de p.ex. 8 N ne gêne nullement dans l'étape (a). On peut donc traiter par le procédé de la présente invention des solutions aqueuses germanifères très acides. Le seul inconvénient, qu'entraîne le traitement de solutions très acides, réside dans le fait qu'on doit ultérieurement neutraliser beaucoup d'acide dans l'étape (c). Pour cette raison, il n'est pas indiqué d'utiliser une solution aqueuse de départ dont l'acidité est supérieure à 2 N, à moins que les conditions de préparation de la solution de départ, p.ex. par lixiviation d'une matière germanifère, n'imposent une acidité supérieure à 2 N.

Lorsque la solution de départ est exempte de métaux, qui sont extraits en milieu acide par une 8-hydroxyquinoline substituée, il est préférable d'opérer de façon que l'acidité de la phase aqueuse appauvrie en germanium, produite dans l'étape (a), soit d'environ 0,1 N. On obtient ainsi un bon rendement d'extraction de germanium et on doit neutraliser peu d'acide dans l'étape (c).

Lorsqu'on veut produire dans l'étape (a) une phase aqueuse appauvrie en germanium d'une acidité prédéterminée, on peut utiliser un liquide organique qui n'a pas été acidifié préalablement, mais il faut alors soit utiliser une solution aqueuse de départ, dont l'acidité est sensiblement supérieure à l'acidité prédéterminée susdite, soit ajouter de l'acide au cours de l'étape (a). Pour atteindre ce même but, il est cependant plus avantageux d'utiliser un liquide organique préalablement acidifié et une solution de départ dont l'acidité n'est pas sensiblement différente de l'acidité prédéterminée susdite, comme il sera expliqué plus loin.

Il est très utile de prévoir entre les étapes (b) et (c) une opération de lavage, qui consiste à mettre la phase organique chargée de germanium en contact avec de l'eau. On ré-extrait ainsi de la phase organique une partie de l'acide qu'elle contient et qu'autrement aurait dû être neutralisée dans l'étape (c). Si la phase organique germanifère contient du cuivre, du zinc et/ou du fer, on ré-extrait également une partie de ce cuivre et de ce fer et à peu près la totalité de ce zinc (plus de 95%). Par cette opération de lavage on produit donc d'une part une phase organique germanifère partiellement désacidifiée et partiellement épurée et d'autre part une phase aqueuse acide impure. Après séparation de ces phases on envoie la phase organique à l'étape (c) et on peut ajouter la phase aqueuse à de la solution de départ qui doit encore passer par l'étape (a).

Dans l'étape (c) on sépare de la phase organique sélectivement le germanium et l'acide qu'elle contient. Si la phase organique à traiter dans l'étape (c) contient du cuivre et/ou du fer, ces éléments ne sont pas séparés de la phase organique dans l'étape (c).

La phase organique appauvrie en germanium qui résulte de l'étape (d) et qui peut contenir des éléments tels Cu et Fe, peut être recyclé telle quelle vers l'étape (a). Il est toutefois préférable d'acidifier cette phase organique, avant son recyclage, en la mettant en contact avec une solution aqueuse acide, puisqu'au cours de cette opération le cuivre et le fer passent de la phase organique dans la phase aqueuse; après séparation des deux phases, on peut donc recycler une phase organique épurée.

Un mode préféré de réalisation du procédé de l'invention est illustré par le schéma ci-joint. Il comporte essentiellement les opérations d'extraction liquide-liquide suivantes: l'extraction du germanium de la solution de départ, le lavage de la phase organique germanifère, la ré-extraction du germanium de la phase organique germanifère lavée et l'acidification de la phase organique déchargée. Chacune de ces opérations peut être effectuée dans un appareil conventionnel d'extraction liquide-liquide, par exemple dans un mélangeur-décanteur lorsque l'opération est effectuée en un étage ou dans une batterie de mélangeurs-décanteurs lorsque l'opération est effectuée en plusieurs étages. Les mélangeurs-décanteurs ou appareils équivalents, utilisés pour effecteur la ré-extraction du germanium de la phase organique germanifère, sont équipés pour recycler de la phase aqueuse du compartiment de décantation vers le compartiment de mélange. Un tel mélangeur-décanteur est décrit dans le document EP-A-0 031 172.

Il est à noter que le procédé de la présente invention est particulièrement intéressant pour séparer le germanium de solutions aqueuses contenant du cuivre. Il va de soi qu'il permet de traiter aussi des solutions exemptes de cuivre, mais dans ce cas il est plus indiqué de faire appel au procédé faisant l'objet de la demande de brevet européen EP-A-0 068 540 intitulée «Procédé pour séparer du germanium d'une solution aqueuse à l'aide d'un alpha-hydroxyoxime» et déposée au même jour que la présente demande par la Demanderesse de la présente demande.

*Exemple 1*

Cet exemple se rapporté à la séparation du germanium d'une solution aqueuse germanifère selon le procédé de l'invention.

La solution de départ contient en g/l: 2,4 Ge; 25 $Fe^{3+}$; 23 Zn; 0,8 Cu; 60 $H_2SO_4$.

Le liquide organique est constitué d'une solution de 10% en volume de «LIX 26» et de 25% en volume d'isodécanole dans du kérosène, et il contient 10 g/l de $H_2SO_4$.

On effectue l'extraction du germanium à la température ambiante, en contre-courant, en 5 étages et avec un rapport O:A de 1:2.

On obtient ainsi une phase organique germanifère et un raffinat pratiquement exempt de germanium. La phase organique contient en g/l: 4,78 Ge; 1,95 $Fe^{3+}$; 0,42 Zn; 0,45 Cu; 4 $H_2SO_4$. Le raffinat contient en g/l: 0,006 Ge; 24,02 $Fe^{3+}$; 22,79 Zn; 0,57 Cu; 63 $H_2SO_4$.

On lave la phase organique germanifère avec de l'eau. On effectue cette opération à la température ambiante, en contre-courant, en 2 étages et avec un rapaport O:A de 10:1.

On obtient ainsi une phase organique germanifère lavée et une eau de lavage acide. La phase organique germanifère lavée contient en g/l: 4,718 Ge; 0,5 $H_2SO_4$. L'eau de lavage acide contient en g/l: 0,7 Ge; 3,5 Fe; 4 Zn; 0,9 Cu; 35 $H_2SO_4$.

On ré-extrait le germanium de la phase organique germanifère lavée avec une solution aqueuse de NaOH à 150 g/l. On effectue cette opération à 52°C, en contre-courant, en 5 étages et avec un rapport O:A apparent de 7:1, ce qui veut dire qu'on utilise 0,143 litre de solution de NaOH fraîche par litre de phase organique. A chaque étage on recycle autant de la phase aqueuse du compartiment de décantation vers le compartiment de mélange qu'on réalise dans chacun des compartiments de mélange un rapport O:A réel de 0,9.

On obtient ainsi une phase organique déchargée de germanium et un éluat germanifère. La phase organique déchargée de germanium contient en g/l: 0,02 Ge. L'éluat germanifère contient en g/l: 32,88 Ge. La teneur totale en Fe, Zn et Cu de cet éluat est inférieure à 0,002 g/l.

On acidifie la phase organique déchargée de germanium avec une solution aqueuse de$H_2SO_4$ à 250 g/l. On effectue cette opération à la température ambiante, en un seul étage et avec un rapport O:A de 5:1.

On obtient ainsi une phase organique régénérée et une solution aqueuse impure. La phase organique régénérée contient en g/l: 0,019 Ge et 0 $H_2SO_4$. La solution aqueuse impure contient en g/l: 0,002 Ge; 8 $Fe^{3+}$; 0,1 Zn; 1,8 Cu; 120 $H_2SO_4$.

*Exemple 2*

Cet exemple se rapporté à un essai de ré-extraction du germanium d'une phase organique germanifère lavée, constituée d'une solution de 10% en volume de «Kelex 100» et de 25% en volume d'isodécanole dans du kérosène et contenant 4,01 g/l de Ge et 1,1 g/l de $H_2SO_4$.

On effectue la ré-extraction du germanium de la façon décrite dans l'exemple 1, mais au lieu de réaliser dans chacun des compartiments de mélange un rapport O:A réel de 0,9, on réalise un rapport O:A réel de 1,2.

On constate que les phases se séparent difficilement. Pour obtenir une séparation nette des phases, il faut les centrifuger. La phase organique centrifugée titre encore 2,9 g/l de Ge, ce qui veut dire qu'on n'a élué que 27% du Ge présent dans la phase organique germanifère lavée.

A la longue il y a formation d'un précipité de Na2-Ge207·xH20 dans la phase organique et on doit arrêter l'installation.

*Exemple 3*

Cet exemple se rapporte, comme l'exemple 2, à un essai de ré-extraction du germanium d'une phase organique germanifère lavée identique à celle utilisée dans l'exemple 2.

On effectue la ré-extraction du germanium de la façon décrite dans l'exemple 1, mais au lieu d'opérer à 52°C on opère à 45°C.

On constate que le temps de décantation est moins de 20 minutes. La phase aqueuse décantée contient moins de 100 ppm de phase organique; elle titre 27,9 g/l de Ge. La phase organique décantée ne contient que 0,022 g/l de Ge.

Lorsqu'on compare les résultats des essais décrits dans les exemples 2 et 3, on voit que, pour obtenir une ré-extraction satisfaisante du germanium, il est essentiel d'opérer avec un rapport O:A inférieur à 1.

**Revendications**

1. Procédé pour séparer du germanium d'une solution aqueuse acide germanifère, suivant lequel
(a) on met la solution en contact avec un liquide organique contenant une 8-hydroxyquinoline substituée en produisant ainsi une phase organique chargée de germanium et une phase aqueuse appauvrie en germanium;
(b) on sépare la phase organique chargée de germanium de la phase aqueuse appauvrie en germanium;
(c) on met à une température supérieure à 40°C la phase organique chargée de germanium en contact avec une solution aqueuse basique en produisant ainsi une phase organique appauvrie en germanium et une phase aqueuse basique chargée de germanium, et
(d) on sépare à une température supérieure à 40°C la phase organique appauvrie en germanium de la phase aqueuse basique chargée de germanium,
caractérisé en ce qu'on utilise dans l'étape (c) un rapport volumétrique entre la phase organique et la phase aqueuse (O:A) inférieur à 1.

2. Procédé selon la revendication 1, caractérisé en ce qu'on recycle une fraction de la phase aqueuse résultant de l'étape (d) vers l'étape (c).

3. Procédé selon la revendication 1 ou 2, caractérisé en ce qu'on effectue les étapes (c) et (d) à température comprise entre 45 et 60°C.

4. Procédé selon la revendication 1, 2 ou 3, caractérisé en ce que le rapport volumétrique (O:A) susdit est compris entre 0,9 et 0,5.

5. Procédé selon la revendication 1, 2, 3 ou 4, caractérisé en ce que la solution aqueuse acide germanifère contient, outre le germanium, d'autres éléments qui sont extraits en milieu acide par ledit liquide organique et qu'on produit dans l'étape (a) une phase aqueuse appauvrie en germanium dont l'acidité est d'au moins 1 N.

6. Procédé selon la revendication 5, caractérisé en ce que la solution aqueuse acide germanifère contient du cuivre.

7. Procédé selon la revendication 1, 2, 3 ou 4, caractérisé en ce que la solution aqueuse acide germanifère est exempte d'éléments, qui sont co-extraits avec le germanium, et qu'on produit dans l'étape (a) une phase aqueuse appauvrie en germanium dont l'acidité est d'environ 0,1 N.

8. Procédé selon l'une quelconque des revendications précédentes, caractérisé en ce qu'on lave la phase organique chargée de germanium, séparée à l'étape (b), avec de l'eau.

9. Procédé selon l'une quelconque des revendications précédentes, caractérisé en ce qu'on acidifie la phase organique appauvrie en germanium, séparée à l'étape (d).

10. Procédé selon l'une quelconque des revendications précédentes, caractérisé en ce que le liquide organique contient de 1 à 20% en volume de la 8-hydroxyquinoline substituée.

11. Procédé selon l'une quelconque des revendications précédentes, caractérisé en ce qu'on utilise en tant que 8-hydroxyquinoline substituée, une 7-alkényl-8-hydroxyquinoline.

**Claims**

1. A process for separating germanium from a germanium-containung aqueous acid solution, according to which
(a) the solution is contacted with an organic liquid including a substituted 8-hydroxyquinoline, thereby producing a germanium-loaded organic phase and an aqueous phase depleted in germanium,
(b) the germanium-loaded organic phase is separated from the aqueous phase depleted in germanium,

(c) the germanium-loaded organic phase is contacted at a temperature above 40°C with an aqueous basic solution, thereby producing an organic phase depleted in germanium and a germanium-loaded basic aqueousphase, and

(d) the organic phase depleted in germanium is separated at a temperature above 40°C from the germanium-loaded basic aqueous phase, and

characterized in that in step (c) an organic phase : aqueous phase volume ratio (O : A) of less than 1 is used.

2. A process according to claim 1, characterized in that a fraction of the aqueous phase resulting from step (d) is recycled to step (c).

3. A process according to claim 1 or 2, characterized in that steps (c) and (d) are performed at a temperature of between 45 and 60°C.

4. A process according to claim 1, 2 or 3, characterized in that said volume ratio (O : A) is between 0.9 and 0.5.

5. A process according to claim 1, 2, 3 or 4, characterized in that the germanium-containing aqueous acid solution includes, in addition to germanium, other elements which are extracted in acid medium by said organic liquid and that in step (a) an aqueous phase depleted in germanium is produced the acidity of which is at least 1 N.

6. A process according to claim 5, characterized in that the germanium-containing aqueous acid solution includes copper.

7. A process according to claim 1, 2, 3 or 4, characterized in that the germanium-containing aqueous acid solution is free from elements, which are coextracted with germanium, and that in step (a) an aqueous phase depleted in germanium is produced the acidity of which is about 0.1 N.

8. A process according to any of the preceding claims, characterized in that the germanium-loaded organic phase separated in step (b) is washed with water.

9. A process according to any of the preceding claims, characterized in that the organic phase depleted in germanium separated in step (d) is acidified.

10. A process according to any of the preceding claims, characterized in that the organic liquid includes from 1 to 20 per cent in volume of the substituted 8-hydroxyquinoline.

11. A process according to any of the preceding claims, characterized in that a 7-alkenyl-8-hydroxyquinoline is used as a substituted 8-hydroxyquinoline.

**Patentansprüche**

1. Verfahren zur Abtrennung des Germaniums aus einer wässrigen sauren germaniumhaltigen Lösung, bei dem man

(a) die Lösung mit einer organischen Flüssigkeit, die ein substituiertes 8-Hydroxychinolin enthält, in Berührung bringt, wodurch eine mit Germanium beladene organische Phase und eine an Germanium verarmte wässrige Phase entsteht,

(b) die mit Germanium beladene organische Phase von der an Germanium verarmten wässrigen Phase trennt,

(c) die organische mit Germanium beladene Phase bei einer Temperatur oberhalb 40°C mit einer wässrigen basischen Lösung in Berührung bringt, wodurch eine organische an Germanium verarmte und eine wässrige, basische mit Germanium beladene Phase entsteht, und

(d) bei einer Temperatur oberhalb 40°C die organische an Germanium verarmte Phase von der wässrigen, basischen mit Germanium beladenen Phase trennt,

dadurch gekennzeichnet, dass man in der Stufe (c) zwischen der organischen und der wässrigen Phase ein Volumenverhältnis (O:W) kleiner als 1 anwendet.

2. Verfahren nach Anspruch 1, dadurch gekennzeichnet, dass man eine Fraktion von der aus der Stufe (d) hervorgehenden wässrigen Phase in die Stufe (c) zurückführt.

3. Verfahren nach Anspruch 1 oder 2, dadurch gekennzeichnet, dass man die Stufen (c) und (d) bei einer Temperatur im Bereich von 45 bis 60°C durchführt.

4. Verfahren nach Anspruch 1, 2 oder 3, dadurch gekennzeichnet, dass man das genannte Volumenverhältnis (O:W) im Bereich von 0,9 bis 0,5 hält.

5. Verfahren nach Anspruch 1, 2, 3 oder 4, dadurch gekennzeichnet, dass die wässrige, saure germaniumhaltige Lösung ausser Germanium noch andere Elemente enthält, die in saurem Milieu durch die genannte organische Flüssigkeit extrahiert werden, und dass man in der Stufe (a) eine wässrige, an Germanium verarmte Phase herstellt, deren Azidität mindestens 1 n ist.

6. Verfahren nach Anspruch 5, dadurch gekennzeichnet, dass die wässrige, saure, germaniumhaltige Lösung Kupfer enthält.

7. Verfahren nach Anspruch 1, 2, 3 oder 4, dadurch gekennzeichnet, dass die wässrige, saure, germaniumhaltige Lösung frei ist von Elementen, die zusammen mit dem Germanium extrahiert werden, und dass man in der Stufe (a) eine wässrige an Germanium verarmte Phase herstellt, deren Azidität etwa 0,1 n ist.

8. Verfahren nach einem der vorhergehenden Ansprüche, dadurch gekennzeichnet, dass man die in der Stufe (b) abgetrennte organische, mit Germanium beladene Phase mit Wasser wäscht.

9. Verfahren nach einem der vorhergehenden Ansprüche, dadurch gekennzeichnet, dass man die in der Stufe (d) abgetrennte organische an Germanium verarmte Phase ansäuert.

10. Verfahren nach einem der vorhergehenden Ansprüche, dadurch gekennzeichnet, dass die organische Flüssigkeit 1 bis 20 Vol.-% an substituiertem 8-Hydroxychinolin enthält.

11. Verfahren nach einem der vorhergehenden Ansprüche, dadurch gekennzeichnet, dass man als substituiertes 8-Hydroxychinolin ein 7-Alkenyl-8-hydroxychinolin verwendet.

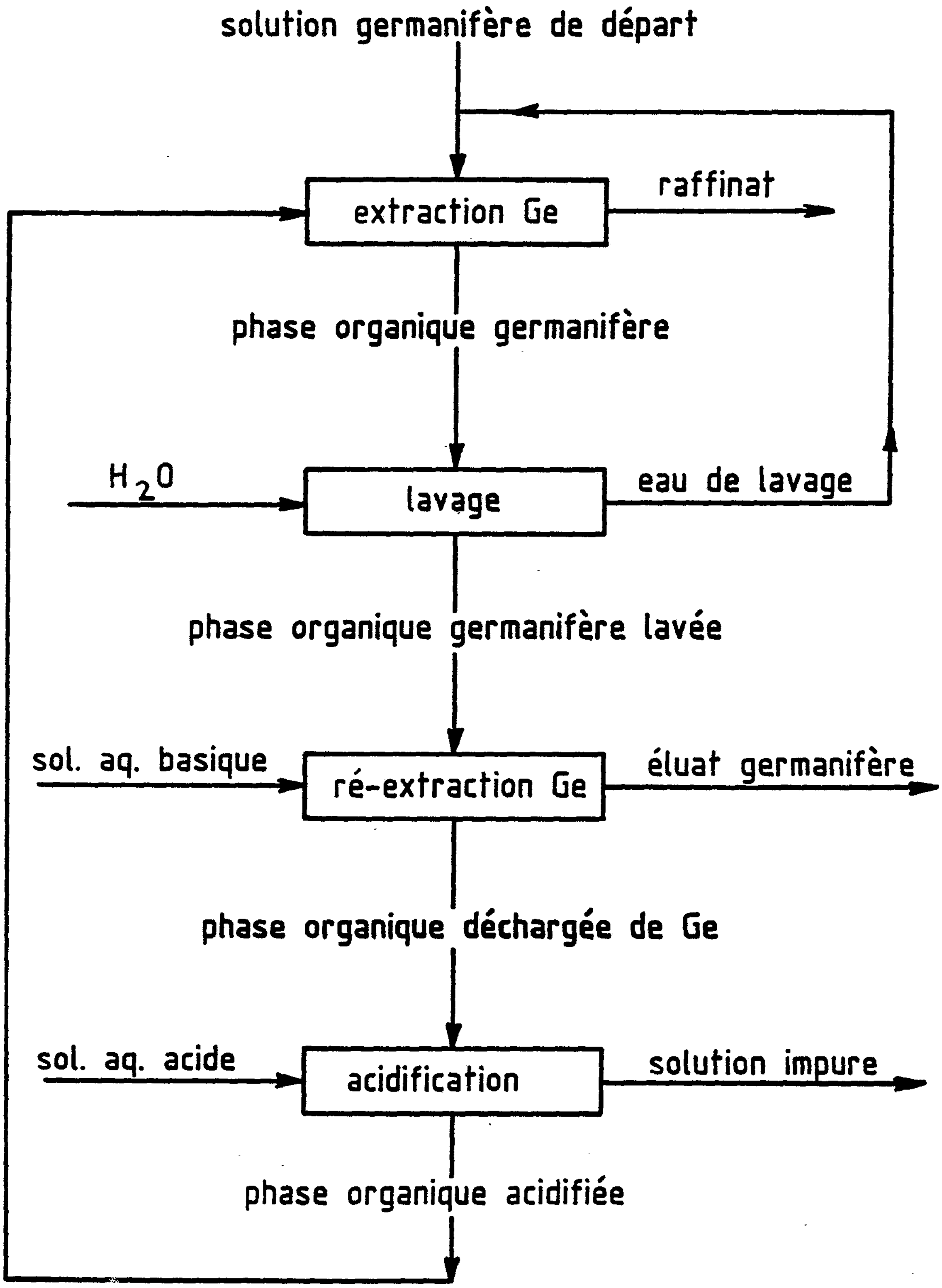
solution germanifère de départ
extraction Ge
raffinat
phase organique germanifère
$H_2O$
lavage
eau de lavage
phase organique germanifère lavée
sol. aq. basique
ré-extraction Ge
éluat germanifère
phase organique déchargée de Ge
sol. aq. acide
acidification
solution impure
phase organique acidifiée